(19) Europäisches Patentamt
European Patent Office
Office européen des brevets

(11) **EP 2 585 943 B1**

(12) **EUROPEAN PATENT SPECIFICATION**

(45) Date of publication and mention
of the grant of the patent:
**09.12.2020 Bulletin 2020/50**

(51) Int Cl.:
***G06F 17/16*** *(2006.01)*

(21) Application number: **11748589.6**

(22) Date of filing: **22.06.2011**

(86) International application number:
**PCT/EP2011/060527**

(87) International publication number:
**WO 2011/161202 (29.12.2011 Gazette 2011/52)**

(54) **A PARALLEL MULTI-PIPELINE SYSTOLIC ARRAY FOR COMPLEX SINGULAR VALUE DECOMPOSITION ON A MULTI-PROCESSOR DEVICE**

SYSTOLISCHES ARRAY MIT MEHREREN RÖHREN FÜR KOMPLEXE EINZELWERT-ZERLEGUNG EINER MEHRPROZESSOR-VORRICHTUNG

RÉSEAU SYSTOLIQUE À PLUSIEURS PIPELINES PARALLÈLES POUR UNE DÉCOMPOSITION EN VALEURS SINGULIÈRES COMPLEXES SUR UN DISPOSITIF À MULTIPLES PROCESSEURS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.06.2010 GR 20100100361**

(43) Date of publication of application:
**01.05.2013 Bulletin 2013/18**

(73) Proprietor: **Intracom S.A. Telecom Solutions
19002 Peania (GR)**

(72) Inventors:
• **DIMITRIOU, Athanasios**
**GR-19002 Peania (GR)**
• **PERISSAKIS, Stylianos**
**GR-19002 Peania (GR)**
• **PANAYIOTOPOULOS, Ilias**
**GR-19002 Peania (GR)**

(74) Representative: **Samuelides, Emmanuel
Leof. Alexandras 43
114 73 Athens (GR)**

(56) References cited:
**WO-A1-2011/038940**

• **Perissakis S et al: "6d3 - Intensive and Flexible Digital PHY/MAC Processing for Very High Data Rate", Project ICT-215282 STP ROCKET, Deliverable D19, 8 March 2010 (2010-03-08), XP055000359, Retrieved from the Internet: URL:http://www.ict-rocket.eu/documents/Del iverables/ROCKET_6D3ICOMb.pdf [retrieved on 2011-06-09] -& Anonymous: "7th Framework Programme - ICT PROJECT: ROCKET - Deliverables", Print-out of Internet page, 9 June 2011 (2011-06-09), XP055000410, Retrieved from the Internet: URL:http://www.ict-rocket.eu/deliverables. php [retrieved on 2011-06-09] -& Anonymous: "0d2 - Project Final Report", Project ICT-215282 STP ROCKET, Deliverable D13, 15 February 2010 (2010-02-15), pages 0-52, XP055000576, Retrieved from the Internet: URL:http://www.ict-rocket.eu/documents/Del iverables/ROCKET_0D2UPCa.pdf [retrieved on 2011-06-13]**
• **HEMKUMAR N D ET AL: "A systolic VLSI architecture for complex SVD", PROCEEDINGS OF THE IEEE INTERNATIONAL SYMPOSIUM ON CIRCUITS AND SYSTEMS 1992 (ISCAS'92), 10-13 MAY 1992, SAN DIEGO, CA, USA, vol. 3, 1992, pages 1061-1064, XP010061418, DOI: 10.1109/ISCAS.1992.230297 ISBN: 978-0-7803-0593-9 cited in the application**

- Hemkumar N D: "A Systolic VLSI Architecture for Complex SVD", Master's Thesis, Department of Electrical and Computer Engineering, Rice University, Texas, USA, 1991, XP055000566, Retrieved from the Internet: URL:http://www-ece.rice.edu/~cavallar/thes es/hemkumar_ms.pdf [retrieved on 2011-06-10]
- PERISSAKIS S ET AL: "Implementation of MU-MIMO precoding in OFDMA systems", PROCEEDINGS OF FUTURE NETWORK & MOBILESUMMIT 2010, 16-18 JUNE 2010, FLORENCE, ITALY, 16 June 2010 (2010-06-16), XP055000565,
- Yue Wang: "Singular Value Decomposition Based Pipeline Architecture for MIMO Communication Systems", Master's Thesis, Department of Electrical and Computer Engineering, Drexel University, Philadelphia, PA, USA, June 2010 (2010-06), XP055000567, Retrieved from the Internet: URL:http://dspace.library.drexel.edu/bitst ream/1860/3305/1/Wang_Yue.pdf [retrieved on 2011-06-10] -& Anonymous: "iDEA: Drexel E-repository and Archives: Singular value decomposition based pipeline architecture for MIMO communication systems", iDEA: Drexel E-repository and Archives, 10 June 2011 (2011-06-10), XP055000571, Retrieved from the Internet: URL:http://dspace.library.drexel.edu/handl e/1860/3305

- SHEN-FU HSIAO ET AL: "Parallel Singular Value Decomposition of complex matrices using multidimensional CORDIC algorithms", IEEE TRANSACTIONS ON SIGNAL PROCESSING, vol. 44, no. 3, March 1996 (1996-03), XP011057342, ISSN: 1053-587X

**Description**

The present invention refers to the field of wireless communications and more specifically to the design of a **P**arallel **M**ulti-Pipeline **S**ystolic **A**rray (PMSA) architecture that implements Complex Singular Value Decomposition (CSVD) on a multi-processor device. CSVD is an important matrix factorization technique of a complex matrix P into a product of three matrices, i.e. a Hermitian unitary matrix of eigenvectors U , a diagonal matrix of eigenvalues Σ and a matrix of eigenvectors V, with several applications in Digital signal processing and wireless communications.

A method for CSVD decomposition is known from "N. D. Hemkumar, J. R. Cavalaro, "A Systolic VLSI Architecture for Complex SVD" IEEE International Symposium on Circuits and Systems (ISCAS), May 1992, Page(s):1061-1064". According to this document the inversion matrix is partitioned such that a dedicated processor element is allocated to each sub-matrix thus increasing significantly the time needed to compute a single matrix without allowing for a pipelined approach to optimally process a number of consecutive matrices.

The object of the invention is to propose a method and an apparatus, which is more efficient in terms of execution speed than the conventional mesh connected systolic array architecture such that it can decompose fast and efficiently a number of consecutive matrices on a multi-processor array device.

The invention is defined in the independent claims 1 and 6.

The proposed architecture decomposes the CSVD problem into several parallel pipeline branches, where each pipeline branch is dedicated to process a sub-matrix of each one of the consecutive input matrices. Each sub-matrix of each input matrix input is supplied to the corresponding pipeline branch and is subjected to two passes or steps, Pass 1 and Pass 2, and a further swap and exchange step. Each branch at each pass implements a specific systolic array structure thus forming a pipeline which is fed by the corresponding sub-matrix of each consecutive input matrix. The rotational matrices computed in the diagonal pipelines at each pass, are supplied as known data to the off-diagonal pipelines. Pass 1 performs QR decomposition and Pass 2 completes the diagonalization on each of the diagonal sub-matrices while performing the necessary computations on the off-diagonal sub-matrices using the rotational matrices calculated at each individual pass.

The method and apparatus according to the invention which implement a PMSA architecture achieve a significant throughput advantage in comparison to known methods. In the proposed PMSA architecture the pipeline streams are implemented on a large array of interconnected processor elements. This allows for optimum design partitioning and eliminates the need for a dedicated swap & exchange unit by replacing these operations with simple signal interconnections. Using this technique it is possible to achieve optimized performance and significant increase in throughput such that when the previous matrix **P**(*k*-1) is being processed in Pass 2, the current matrix **P**(*k*) is simultaneously processed in Pass 1. The current embodiment of the design uses the CORDIC algorithm and achieves a CSVD for each consecutive matrix within about 5μsec (800 cycles of 160MHz clock) given a certain pipeline latency which is insignificant for a large number of matrices. The throughput can be further enhanced by applying lookup tables at the expense of memory or precision.

The dependent claims define particular embodiments offering further advantages.

Preferred embodiments of the invention will be described with reference to **figures 1 to 10.** In particular:

**Figure 1** presents the three successive steps conceptually comprising a Σ-sweep, i.e. the sequence of steps for the calculation of the diagonal matrix Σ.

**Figure 2** presents a single Σ-sweep of a Σ-PMSA structure.

**Figure 3** presents a single U-sweep of a U-PMSA structure, i.e. the sequence of steps for the calculation of matrix U.

**Figure 4** presents a single V-sweep of a V-PMSA structure, i.e. the sequence of steps for the calculation of matrix V.

**Figure 5** presents the systolic array structure corresponding to **Pass 1.**

**Figure 6** presents the systolic array structure corresponding to **Pass 2.**

**Figure 7** presents the signals required to perform the swap and exchange algorithm and the connection of the previous sweep to the following sweep for the computation of the eigenvalue diagonal matrix Σ(*k*).

**Figures 8** and **9** present the signals required to perform the swap and exchange algorithm and the connection of the previous sweep to the following sweep for the computation of the eigenvector unitary matrices **U**(*k*) and **V**(*k*).

**Figure 10** presents the complete PMSA architecture comprising in total nine sweeps.

We assume a complex *NxN* matrix P, which is partitioned into 2x2 complex sub-matrices of the form

$$\mathbf{P}^{kl} = \begin{bmatrix} A^{kl}e^{j\vartheta_a^{kl}} & B^{kl}e^{j\vartheta_b^{kl}} \\ C^{kl}e^{j\vartheta_c^{kl}} & D^{kl}e^{j\vartheta_d^{kl}} \end{bmatrix} \tag{1}$$

where, superscript *kl* is the corresponding sub-matrix. The SVD is the factorization of a complex matrix $\mathbf{P}^{kl}$ into a product of three matrices

$$\mathbf{P}^{kl} = \mathbf{U}^{kl} \cdot \mathbf{\Sigma}^{kl} \cdot \left(\mathbf{V}^{kl}\right)^{H} \tag{2}$$

where $\mathbf{U}^{kl}$ and $\mathbf{V}^{kl}$ are unitary matrices of singular vectors and $\Sigma^{kl}$ is a diagonal matrix of singular values which correspond to sub-matrix *kl*. The Jacobi algorithm is commonly used due to its numerical stability and high degree of parallelism. The two sided rotation method makes use of a sequence of plane rotations to diagonalize the matrix $\mathbf{P}^{kl}$. We calculate

$$\mathbf{U}^{kl} = \mathbf{L}_{2}^{kl} \cdot \mathbf{L}_{1}^{kl}, \quad \mathbf{V}^{kl} = \left(\mathbf{R}_{1}^{kl}\right)^{H} \cdot \left(\mathbf{R}_{2}^{kl}\right)^{H} \tag{3}$$

Such that,

$$\mathbf{P}^{kl} = \mathbf{L}_{2}^{kl} \cdot \mathbf{L}_{1}^{kl} \cdot \mathbf{\Sigma}^{kl} \cdot \left(\mathbf{R}_{1}^{kl}\right)^{H} \cdot \left(\mathbf{R}_{2}^{kl}\right)^{H} \tag{4}$$

where $\mathbf{L}_{1}^{kl}$, $\left(\mathbf{R}_{1}^{kl}\right)^{H}$ are calculated to produce a QR decomposition of $\mathbf{P}^{kl}$,

$$\mathbf{L}_{1}^{kl} = \begin{bmatrix} c_{\phi}^{kl} e^{j\vartheta_{a}^{kl}} & -s_{\phi}^{kl} e^{j\vartheta_{\beta}^{kl}} \\ s_{\phi}^{kl} e^{j\vartheta_{a}^{kl}} & c_{\phi}^{kl} e^{j\vartheta_{\beta}^{kl}} \end{bmatrix}, \quad \left(\mathbf{R}_{1}^{kl}\right)^{H} = \begin{bmatrix} c_{\psi}^{kl} e^{j\vartheta_{g}^{kl}} & s_{\psi}^{kl} e^{j\vartheta_{g}^{kl}} \\ -s_{\psi}^{kl} e^{j\vartheta_{\delta}^{kl}} & c_{\psi}^{kl} e^{j\vartheta_{\delta}^{kl}} \end{bmatrix} \tag{5}$$

where,

$$\vartheta_{a}^{kl} = \vartheta_{\beta}^{kl} = -0.5 \cdot \left(\vartheta_{d}^{kl} + \vartheta_{c}^{kl}\right), \quad \vartheta_{g}^{kl} = -\vartheta_{\delta}^{kl} = 0.5 \cdot \left(\vartheta_{d}^{kl} - \vartheta_{c}^{kl}\right) \tag{6}$$

and,

$$c_{\phi}^{kl} = \cos(0) = 1, \; s_{\phi}^{kl} = \sin(0) = 0 \;, \; \vartheta_{\psi}^{kl} = \tan^{-1}\left(\frac{C}{D}\right), c_{\psi}^{kl} = \cos(\vartheta_{\psi}^{kl}), s_{\psi}^{kl} = \sin(\vartheta_{\psi}^{kl})$$

$$\tag{7}$$

and $\mathbf{L}_{2}^{kl}$, $\left(\mathbf{R}_{2}^{kl}\right)^{H}$ are such that a real diagonal matrix is produced

$$\mathbf{L}_{2}^{kl} = \begin{bmatrix} c_{\lambda}^{kl} e^{j\vartheta_{e}^{kl}} & -s_{\lambda}^{kl} e^{j\vartheta_{n}^{kl}} \\ s_{\lambda}^{kl} e^{j\vartheta_{e}^{kl}} & c_{\lambda}^{kl} e^{j\vartheta_{n}^{kl}} \end{bmatrix}, \quad \left(\mathbf{R}_{2}^{kl}\right)^{H} = \begin{bmatrix} c_{p}^{kl} e^{j\vartheta_{g}^{kl}} & s_{p}^{kl} e^{j\vartheta_{g}^{kl}} \\ -s_{p}^{kl} e^{j\vartheta_{w}^{kl}} & c_{p}^{kl} e^{j\vartheta_{w}^{kl}} \end{bmatrix} \tag{8}$$

where,

$$\vartheta_{e}^{kl} = \vartheta_{w}^{kl} = -0.5 \cdot \vartheta_{x}^{kl}, \quad \vartheta_{n}^{kl} = 0.5 \cdot \vartheta_{x}^{kl}, \quad \vartheta_{g}^{kl} = 0.5 \cdot \vartheta_{x}^{kl} - \vartheta_{w}^{kl} \tag{9}$$

and,

$$\vartheta_l^{kl} = 0.5 \cdot \tan^{-1}\left(\frac{X^{kl}}{Z^{kl} - W^{kl}}\right) - 0.5 \cdot \tan^{-1}\left(\frac{X^{kl}}{-Z^{kl} - W^{kl}}\right), \tag{10}$$

$$c_l^{kl} = \cos(\vartheta_l^{kl}), \quad s_l^{kl} = \sin(\vartheta_l^{kl})$$

$$\vartheta_p^{kl} = 0.5 \cdot \tan^{-1}\left(\frac{X^{kl}}{Z^{kl} - W^{kl}}\right) + 0.5 \cdot \tan^{-1}\left(\frac{X^{kl}}{-Z^{kl} - W^{kl}}\right), \tag{11}$$

$$c_p^{kl} = \cos(\vartheta_p^{kl}), \quad s_p^{kl} = \sin(\vartheta_p^{kl})$$

The first transformation multiplies $\mathbf{P}^{kl}$ with a hermitian Jacobi rotation on the left and a complex Jacobi on the right to produce $\mathbf{P}^{kl'}$ such that the lower left component is nulled and the lower right component is real.

$$\mathbf{P}^{kl'} = \mathbf{L}_1^{kl} \cdot \mathbf{P}^{kl} \cdot \left(\mathbf{R}_1^{kl}\right)^H = \begin{bmatrix} W^{kl}e^{j\vartheta_w^{kl}} & X^{kl}e^{j\vartheta_x^{kl}} \\ 0 & Z^{kl} \end{bmatrix} \tag{12}$$

The second transformation completes the diagonalization by nulling the upper diagonal element

$$\mathbf{P}^{kl''} = \mathbf{L}_2^{kl} \cdot \mathbf{P}^{kl'} \cdot \left(\mathbf{R}_2^{kl}\right)^H = \begin{bmatrix} P^{kl} & 0 \\ 0 & Q^{kl} \end{bmatrix} \tag{13}$$

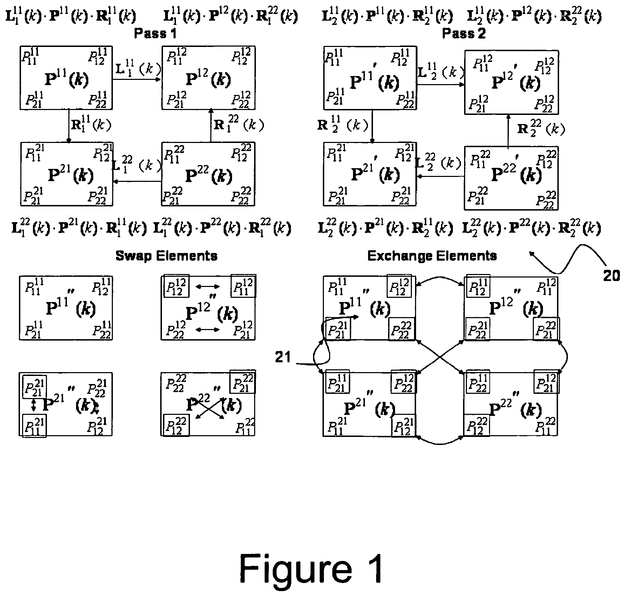

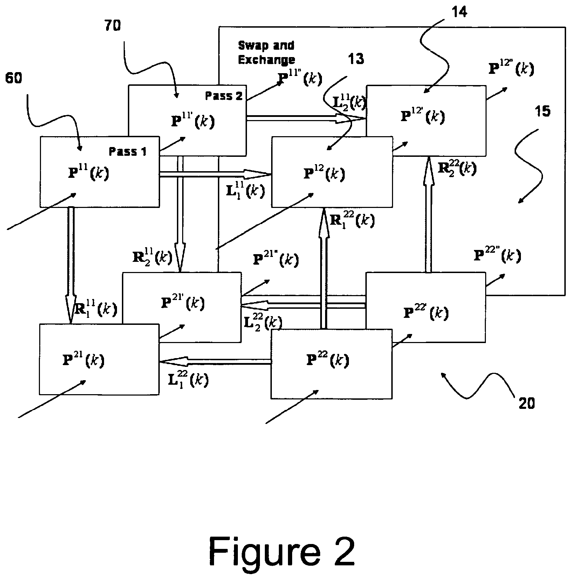

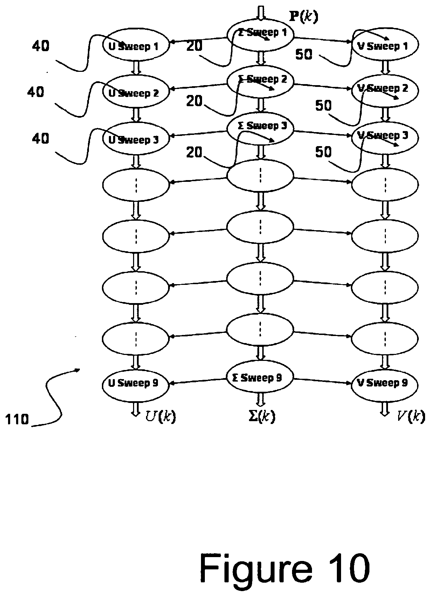

The method is applicable to any *NxN* matrix, which may be partitioned into 2x2 sub-matrix units. As an example, a sequence of 4x4 matrices $\mathbf{P}(k)$ is considered, such that each matrix $\mathbf{P}(k)$ is partitioned to sub-matrices $\mathbf{P}^{11}(k), \mathbf{P}^{12}(k)$, $\mathbf{P}^{21}(k), \mathbf{P}^{22}(k)$. A sequence of three steps namely, Pass 1, Pass 2, Swap and Exchange as shown in **Figure 1** is referred to as a $\Sigma$-sweep and there exists one pipeline per sub-matrix as shown in **Figure 2.** As shown in **Figure 10** a sweep is composed from a $\Sigma$-sweep, a U-sweep and a V-sweep. The $\Sigma$-sweep calculates the diagonal singular value matrix $\Sigma$, the U-sweep calculates the unitary **U** matrix and the V-sweep calculates the unitary **V** matrix.

The number of sweeps must be a multiple of three and it is determined that an acceptable convergence is attained after nine sweeps for the specific embodiment **110** as shown in **Figure 10.**

**Figure 2** presents a single $\Sigma$-sweep of a $\Sigma$-PMSA structure which accepts as input a number of consecutive 4x4 matrices $\mathbf{P}(k)$ partitioned to sub-matrices $\mathbf{P}^{11}(k), \mathbf{P}^{12}(k), \mathbf{P}^{21}(k), \mathbf{P}^{22}(k)$ and performs CSVD to calculate the diagonal eigenvalue matrix $\Sigma(k)$.

The $\Sigma^{kl}(k)$ matrix singular values can be obtained from the $\Sigma$-sweep following the subsequent procedure:

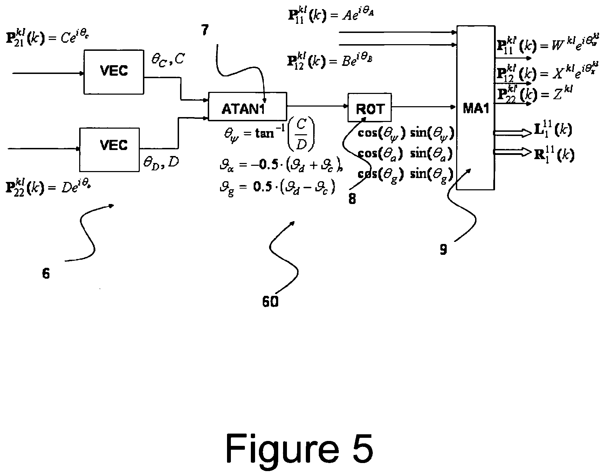

**PASS 1:** As shown in **Figure 5** first we calculate the angles required to obtain equation 5. **Figure 5** shows the implementation of Pass 1. **Figure 5** displays the connection of each Processor Array Element (PAE) of the hardware device, corresponding to the implementation of PASS 1. The two PAE's named VEC **6** are operating in CORDIC vectoring mode. Each take as input a complex number and output the angle and magnitude of each of the complex elements corresponding to the bottom row of the 2x2 sub-matrix. These are subsequently forwarded to PAE ATAN1 **7** which operates in CORDIC Vectoring mode to produce equation 9 and also calculates equation 8. The angles are forwarded to the ROT PAE **8** which operates in cordic rotational mode such that it computes the sine and cosine of the input angle. Subsequently PAE MA1 **9** performs the left and right transformations in equation 7 on sub-matrix $\mathbf{P}^{11}(k)$ to produce matrix $\mathbf{P}^{11'}(k)$ and computes the left and right transformation matrices in equation 14 associated with Pass 1. The left and right transformation matrices that correspond to each diagonal sub-matrix $\mathbf{P}^{11}(k)$ are

$$\mathbf{L}_1^{11}(k) = \begin{bmatrix} c_\phi^{11}(k)e^{j\vartheta_\alpha^{11}(k)} & -s_\phi^{11}(k)e^{j\vartheta_\beta^{11}(k)} \\ s_\phi^{11}(k)e^{j\vartheta_\alpha^{11}(k)} & c_\phi^{11}(k)e^{j\vartheta_\beta^{11}(k)} \end{bmatrix},$$

$$\left(\mathbf{R}_1^{11}(k)\right)^H = \begin{bmatrix} c_\psi^{11}(k)e^{j\vartheta_g^{11}(k)} & s_\psi^{11}(k)e^{j\vartheta_g^{11}(k)} \\ -s_\psi^{11}(k)e^{j\vartheta_\delta^{11}(k)} & c_\psi^{11}(k)e^{j\vartheta_\delta^{11}(k)} \end{bmatrix} \tag{14}$$

The same applies to sub-matrix $\mathbf{P}^{22}(k)$ which in parallel produces matrix $\mathbf{P}^{22'}(k)$ using a separate structure of the form in **60** with corresponding inputs and outputs as shown in **Figure 2.** The left and right transformation matrices that correspond to diagonal sub-matrix $P^{22}(k)$ are

$$\mathbf{L}_1^{22}(k) = \begin{bmatrix} c_\phi^{22}(k)e^{j\vartheta_\alpha^{22}(k)} & -s_\phi^{22}(k)e^{j\vartheta_\beta^{22}(k)} \\ s_\phi^{22}(k)e^{j\vartheta_\alpha^{22}(k)} & c_\phi^{22}(k)e^{j\vartheta_\beta^{22}(k)} \end{bmatrix},$$

$$\left(\mathbf{R}_1^{22}(k)\right)^H = \begin{bmatrix} c_\psi^{22}(k)e^{j\vartheta_g^{22}(k)} & s_\psi^{22}(k)e^{j\vartheta_\delta^{22}(k)} \\ -s_\psi^{22}(k)e^{j\vartheta_g^{22}(k)} & c_\psi^{22}(k)e^{j\vartheta_\delta^{22}(k)} \end{bmatrix}$$

$$(15)$$

The calculated rotation matrices together with $\mathbf{P}^{12}(k)$ and $\mathbf{P}^{21}(k)$ are subsequently forwarded to PAEs Pass1 MA3 (Multiply-Accumulate) **13,** which in parallel perform the following transformations

$$\mathbf{P}^{12'}(k) = \mathbf{L}_1^{11}(k) \cdot \mathbf{P}^{12}(k) \cdot \left(\mathbf{R}_1^{22}(k)\right)^H \qquad (16)$$

$$\mathbf{P}^{21'}(k) = \mathbf{L}_1^{22}(k) \cdot \mathbf{P}^{21}(k) \cdot \left(\mathbf{R}_1^{11}(k)\right)^H \qquad (17)$$

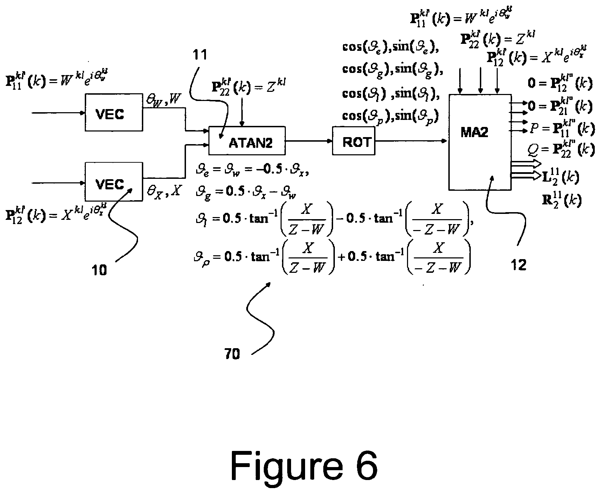

**PASS 2:** As shown in **Figure 6** first we calculate the angles required to obtain equation 6. **Figure 6** shows the implementation of Pass 2. Again, the two PAE's named VEC **10** operating in CORDIC vectoring mode, each take as input a complex number and output the angle and magnitude of each of the complex elements corresponding to the top row of the 2x2 matrix from the Pass 1 output. These are subsequently forwarded to PAE ATAN2 **11** which operates in CORDIC Vectoring mode to produce equation 11 and also calculates equations 12 and 13. The angles are forwarded to the ROT PAE's which operate in cordic rotational mode such that they compute the sine and cosine of the input angles. Subsequently PAE MA2 **12** performs the left and right transformations in equation 10 on sub-matrix $\mathbf{P}^{11'}(k)$ to produce matrix $\mathbf{P}^{11''}(k)$ as shown in **Figure 2.** It also computes the left and right transformation matrices in equation 18 associated with Pass 2. The left and right transformation matrices corresponding to the diagonal sub-matrix $\mathbf{P}^{11'}(k)$ are

$$\mathbf{L}_2^{11}(k) = \begin{bmatrix} c_\lambda^{11}(k)e^{j\vartheta_e^{11}(k)} & -s_\lambda^{11}(k)e^{j\vartheta_n^{11}(k)} \\ s_\lambda^{11}(k)e^{j\vartheta_e^{11}(k)} & c_\lambda^{11}(k)e^{j\vartheta_n^{11}(k)} \end{bmatrix},$$

$$\left(\mathbf{R}_2^{11}(k)\right)^H = \begin{bmatrix} c_p^{11}(k)e^{j\vartheta_g^{11}(k)} & s_p^{11}(k)e^{j\vartheta_g^{11}(k)} \\ -s_p^{11}(k)e^{j\vartheta_w^{11}(k)} & c_p^{11}(k)e^{j\vartheta_w^{11}(k)} \end{bmatrix}$$

$$(18)$$

The same implementation applies to sub-matrix $\mathbf{P}^{22'}(k)$ which in parallel with the previous produces matrix $\mathbf{P}^{22''}(k)$ as shown in **Figure 2.** The left and right transformation matrices that correspond to diagonal sub-matrix $\mathbf{P}^{22'}(k)$ are

$$\mathbf{L}_2^{22}(k) = \begin{bmatrix} c_\lambda^{22}(k)e^{j\vartheta_e^{22}(k)} & -s_\lambda^{22}(k)e^{j\vartheta_n^{22}(k)} \\ s_\lambda^{22}(k)e^{j\vartheta_e^{22}(k)} & c_\lambda^{22}(k)e^{j\vartheta_n^{22}(k)} \end{bmatrix},$$

$$\left(\mathbf{R}_2^{22}(k)\right)^H = \begin{bmatrix} c_p^{22}(k)e^{j\vartheta_g^{22}(k)} & s_p^{22}(k)e^{j\vartheta_g^{22}(k)} \\ -s_p^{22}(k)e^{j\vartheta_w^{22}(k)} & c_p^{22}(k)e^{j\vartheta_w^{22}(k)} \end{bmatrix}$$

$$(19)$$

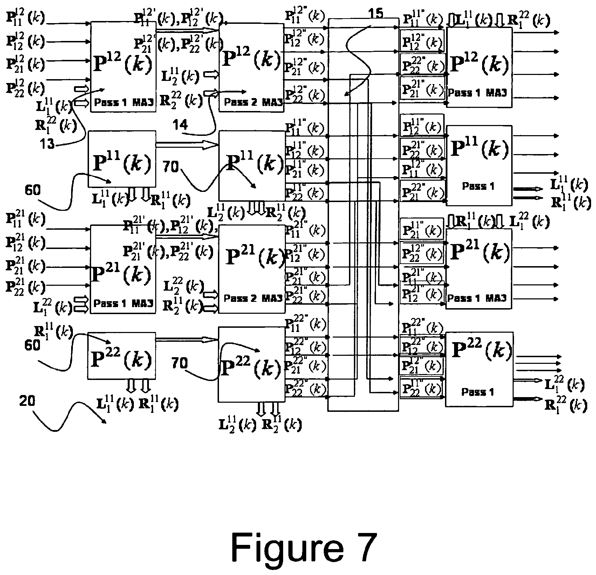

The calculated rotation matrices are subsequently forwarded to PAE Pass 2 MA3 **14** in **Figure 7** corresponding to sub-matrix $\mathbf{P}^{12'}(k)$ and $\mathbf{P}^{21'}(k)$ which perform in parallel the next set of transformations

$$\mathbf{P}^{12''}(k) = \mathbf{L}_2^{11}(k) \cdot \mathbf{P}^{12'}(k) \cdot \left(\mathbf{R}_2^{22}(k)\right)^H \tag{20}$$

$$\mathbf{P}^{21''}(k) = \mathbf{L}_2^{22}(k) \cdot \mathbf{P}^{21'}(k) \cdot \left(\mathbf{R}_2^{11}(k)\right)^H \tag{21}$$

**SWAP & EXCHANGE ELEMENTS:** Subsequently, the elements within each sub-matrix are swapped together as shown in **Figure 1**. In $\mathbf{P}^{12''}(k)$ the horizontal elements are swapped amongst themselves. In $\mathbf{P}^{21''}(k)$ the vertical elements are swapped amongst themselves and in $\mathbf{P}^{22''}(k)$ the diagonal elements are swapped amongst themselves. Sub-matrix $\mathbf{P}^{11''}(k)$ remains unaffected at this stage. The elements $\mathbf{P}_{ij}^{kl}(k)$ in **Figure 7,** which shows the $\Sigma$ sweep, where, superscript $kl$ is the corresponding sub-matrix and subscript $ij$ is the corresponding element within sub-matrix $kl$, are swapped and exchanged in **15** between sub-matrices according to the following rules as shown in **Figure 1**

$$\mathbf{P}_{11}^{12}(k) \xleftrightarrow{\;swap\;} \mathbf{P}_{12}^{12}(k)$$

$$\mathbf{P}_{21}^{12}(k) \xleftrightarrow{\;swap\;} \mathbf{P}_{22}^{12}(k)$$

$$\mathbf{P}_{11}^{21}(k) \xleftrightarrow{\;swap\;} \mathbf{P}_{21}^{21}(k)$$

$$\mathbf{P}_{12}^{21}(k) \xleftrightarrow{\;swap\;} \mathbf{P}_{22}^{21}(k)$$

$$\mathbf{P}_{11}^{22}(k) \xleftrightarrow{\;swap\;} \mathbf{P}_{22}^{22}(k)$$

$$\mathbf{P}_{21}^{22}(k) \xleftrightarrow{\;swap\;} \mathbf{P}_{12}^{22}(k)$$

and,

$$\mathbf{P}_{12}^{11}(k) \xleftrightarrow{\;exchange\;} \mathbf{P}_{12}^{12}(k)$$

$$\mathbf{P}_{21}^{11}(k) \xleftrightarrow{\;exchange\;} \mathbf{P}_{21}^{21}(k)$$

$$\mathbf{P}_{22}^{12}(k) \xleftrightarrow{\;exchange\;} \mathbf{P}_{22}^{21}(k)$$

$$\mathbf{P}_{21}^{12}(k) \xleftrightarrow{\;exchange\;} \mathbf{P}_{21}^{22}(k)$$

$$\mathbf{P}_{22}^{22}(k) \xleftrightarrow{\;exchange\;} \mathbf{P}_{22}^{11}(k)$$

$$\mathbf{P}_{12}^{22}(k) \xleftrightarrow{\;exchange\;} \mathbf{P}_{12}^{21}(k)$$

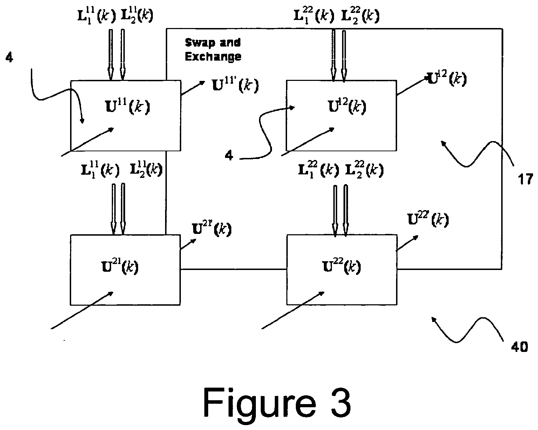

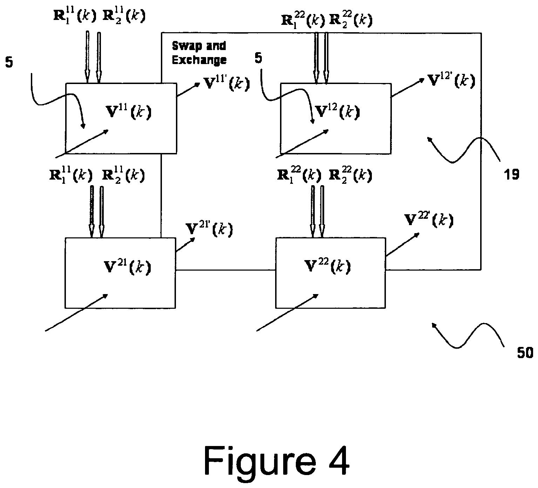

Thus, the method constructs the 4x4 matrix **21** illustrated in **Figure 1** under "Exchange Elements". Subsequently, the singular vectors $\mathbf{U}^{kl}(k)$ and $\mathbf{V}^{kl}(k)$ are obtained as shown in **Figure 3** and **Figure 4** correspondingly, where each figure corresponds to a single U-sweep and V-sweep respectively.
**Figure 3** presents a single U-sweep of a PMSA structure with input a number of consecutive 4x4 matrices $\mathbf{U}(k)$

partitioned to sub-matrices $\mathbf{U}^{11}(k),\mathbf{U}^{12}(k),\mathbf{U}^{21}(k),\mathbf{U}^{22}(k)$ and performs CSVD to calculate the eigenvector unitary matrix $\mathbf{U}(k)$. The first U-sweep in the pipeline stream has constant input the identity matrix $\mathbf{I}_{4x4}$ and subsequent sweeps take as input the previous sweep output. The rotational matrices $\mathbf{L}_1^{kl}$, $\mathbf{L}_2^{kl}$ calculated in **20** are supplied to the corresponding systolic structures in **40**.

**Figure 4** presents a single V-sweep of a PMSA structure with input a number of consecutive 4x4 matrices $\mathbf{V}(k)$ partitioned to sub-matrices $\mathbf{V}^{11}(k),\mathbf{V}^{12}(k),\mathbf{V}^{21}(k),\mathbf{V}^{22}(k)$ and performs CSVD to calculate the eigenvector unitary matrix $\mathbf{V}(k)$. The first V-sweep in the pipeline stream has constant input the identity matrix $\mathbf{I}_{4x4}$ and subsequent sweeps take as input the previous sweep output. The rotational matrices $\mathbf{R}_1^{kl}$, $\mathbf{R}_2^{kl}$ calculated $_{12}$ in **20** are supplied to the corresponding systolic structures in **50**.

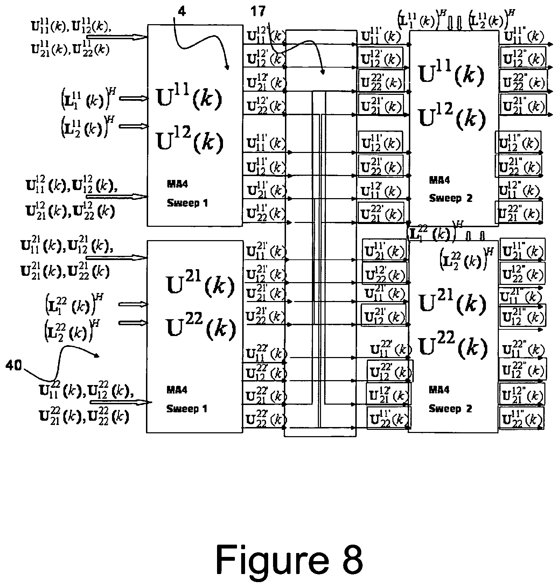

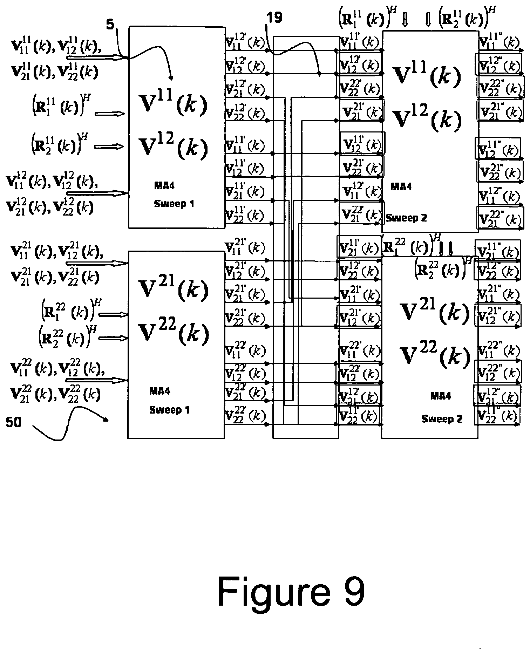

The $\mathbf{U}^{kl}(k)$ and $\mathbf{V}^k(k)$ matrices are originally both equal to the identity matrix and subdivided into sub-matrices $\mathbf{U}^{11}(k),\mathbf{U}^{12}(k),\mathbf{U}^{21}(k),\mathbf{U}^{22}(k)$ and $\mathbf{V}^{11}(k),\mathbf{V}^{12}(k),\mathbf{V}^{21}(k),\mathbf{V}^{22}(k)$. At each pass, the complex rotational matrices in equations 14, 15, 18, 19 generated in a sweep are forwarded to the corresponding $\mathbf{U}^{kl}(k)$, $\mathbf{V}^{kl}(k)$ sub-matrix PAE MA4 **4, 5** correspondingly in **Figure 8** and **Figure 9**. The following calculations are performed at each **U** and **V** sweeps.

$$\mathbf{U}^{11'}(k) = \mathbf{U}^{11}(k) \cdot \left( \mathbf{L}_2^{11}(k) \cdot \mathbf{L}_1^{11}(k) \right)^{H} \tag{22}$$

$$\mathbf{U}^{12'}(k) = \mathbf{U}^{12}(k) \cdot \left( \mathbf{L}_2^{22}(k) \cdot \mathbf{L}_1^{22}(k) \right)^{H} \tag{23}$$

$$\mathbf{U}^{21'}(k) = \mathbf{U}^{21}(k) \cdot \left( \mathbf{L}_2^{11}(k) \cdot \mathbf{L}_1^{11}(k) \right)^{H} \tag{24}$$

$$\mathbf{U}^{22'}(k) = \mathbf{U}^{22}(k) \cdot \left( \mathbf{L}_2^{22}(k) \cdot \mathbf{L}_1^{22}(k) \right)^{H} \tag{25}$$

and,

$$\mathbf{V}^{11'}(k) = \mathbf{V}^{11}(k) \cdot \left( \mathbf{R}_1^{11}(k) \right)^{H} \cdot \left( \mathbf{R}_2^{11}(k) \right)^{H} \tag{26}$$

$$\mathbf{V}^{12'}(k) = \mathbf{V}^{12}(k) \cdot \left( \mathbf{R}_1^{22}(k) \right)^{H} \cdot \left( \mathbf{R}_2^{22}(k) \right)^{H} \tag{27}$$

$$\mathbf{V}^{21'}(k) = \mathbf{V}^{21}(k) \cdot \left( \mathbf{R}_1^{11}(k) \right)^{H} \cdot \left( \mathbf{R}_2^{11}(k) \right)^{H} \tag{28}$$

$$\mathbf{V}^{22'}(k) = \mathbf{V}^{22}(k) \cdot \left( \mathbf{R}_1^{22}(k) \right)^{H} \cdot \left( \mathbf{R}_2^{22}(k) \right)^{H} \tag{29}$$

Finally the elements $\mathbf{U}_{ij}^{kl}(k)$ and $\mathbf{V}_{ij}^{kl}(k)$ in **Figure 8 and Figure 9,** where superscript *kl* is the corresponding sub-matrix and subscript *ij* is the corresponding element within sub-matrix *kl,* are exchanged in **17, 19** between sub-matrices according to the same rule shown in **Figure 1.**

**Figure 10** displays the current SVD implementation. The precision requirements at the expense of hardware allocation allow for up to nine sweeps.

## Claims

1. Apparatus for Complex Singular Value Decomposition of either a single or a number of consecutive matrices, to either a single or a number of consecutive Hermitian unitary matrices of eigenvectors respectively, a single or a number of consecutive diagonal matrices of eigenvalues respectively and a single or a number of consecutive unitary matrices of eigenvectors respectively, including a first structure configured to calculate the diagonal matrices of eigenvalues, **characterized in that** the apparatus further includes a second structure configured to calculate the Hermitian unitary matrices of eigenvectors and a third structure configured to calculate the unitary matrices of eigenvectors, whereby the first structure includes at least one set of blocks **(20),** with each set of blocks of the first structure comprising a first hardware block **(60, 13),** a second hardware block **(70, 14)** other than the first hardware block and a third hardware block **(15)** other than the first hardware block and the second hardware block and

✓ the first hardware block **(60, 13)** includes means to transform a 2x2 square matrix to a 2x2 upper triangular square matrix,
✓ the second hardware block **(70, 14)** includes means to transform a $2\times2$ upper triangular matrix to a to a 2x2 diagonal square matrix,
✓ the third hardware block **(15)** includes means to swap and exchange elements of matrices,
✓ the first structure comprises means to link the first hardware block to the second hardware block, so that the output of the first hardware block is inputted to the second hardware block and the apparatus further comprises means to link the second hardware block to the third hardware block, so that the output of the second hardware block is inputted to the third hardware block,
✓ the second structure includes an equal number of sets of blocks **(40)** with the sets of blocks **(20)** of the first structure, with each set of block of the second structure **(40)** having means **(4)** configured to input data from output means provided to a corresponding set of block **(20)** of the first structure, and the third structure includes an equal number of sets of blocks **(50)** with the set of blocks **(20)** of the first structure, with each set of block of the third structure **(20)** having means **(5)** configured to input data from output means provided to a corresponding set of block **(20)** of the first structure.

2. Apparatus according to claim 1, whereby the first structure includes n sets of blocks, with n being a multiple of three, with each said set of blocks comprising a first hardware block **(60, 13),** a second hardware block **(70, 14)** other than the first hardware block and a third hardware block **(15)** other than the first hardware block and the second hardware block; whereby

✓ the first hardware block **(60, 13)** of each of the said n sets of blocks includes means to transform a 2x2 square matrix to a 2x2 upper triangular square matrix,
✓ the second hardware block **(70, 14)** of each of the said n sets of blocks includes means to transform a $2\times2$ upper triangular matrix to a to a $2\times2$ diagonal square matrix,
✓ the third hardware block **(15)** of each of the said n sets of blocks includes means to swap and exchange elements of matrices,
✓ the first structure includes means to transmit the output of the i-th set of blocks, with i equals 1 to n-1, to the i+1 set of blocks, and
✓ the apparatus includes means to process a plurality of consecutive matrices simultaneously.

3. Apparatus according to claim 1 or claim 2, whereby the means to swap and exchange elements of matrices are wiring connections.

4. Apparatus according to claim 1 or claim 2, whereby the means to swap and exchange elements of matrices are software means.

5. Apparatus according to any one of claims 1 to 4, for Complex Singular Value Decomposition of a number of consecutive $4\times4$ matrices, whereby

✓ the first hardware block **(60, 13)** includes four distinct systolic array structures, with each one of the four systolic array structures configured to process a 2x2 square matrix,
✓ the second hardware block **(70, 14)** includes four distinct systolic array structures, with each one of the four systolic array structures configured to process a 2x2 square matrix,
✓ each one of the four distinct systolic array structures of the first hardware block **(60, 13)** and each one of the four distinct systolic array structures of the second hardware block **(70, 14)** comprise complementary means that link the first hardware block to the second hardware block.

6. Method for Complex Singular Value Decomposition of a number of at least two consecutive matrices, to a number of consecutive Hermitian unitary matrices of eigenvectors, a number of consecutive diagonal matrices of eigenvalues and a number of consecutive unitary matrices of eigenvectors, whereby

✓ each consecutive matrix undergoes a number of *iter* identical iterations in a first structure, with the output of each iteration being rotational matrices and the diagonal matrix of eigenvalues,

✓ the diagonal matrix of eigenvalues *of the j-th* iteration with *j = 1 to iter-1* is the input to the *j*+1 iteration,

✓ each iteration includes a first step and a second step other than the first step, with the output of the first step being input to the second step, **characterized in that**

✓ when a matrix is processed in the second step of its *i-th* iteration, with *i* equals *1 to iter,* the following matrix of the consecutive matrices is processed in the first step of its *i-th* iteration,

✓ each one of the first step and the second step are performed in distinct hardware blocks, so that the first step is performed in a first hardware block and the second step is performed in a second hardware block, other than the first hardware block, and the output of the first step is input to the second block,

✓ during each iteration, the rotational matrices are supplied to a second structure provided for the calculation of the Hermitian unitary matrices and to a third structure provided for the calculation of the unitary matrices of eigenvectors, with the first structure, the second structure and the third structure being distinct from each other.

7. Method according to claim 6, whereby each iteration includes a third step other than the first step and the second step, with the output of the second step being input to the third step and the output of the third step of the *I-th* iteration with *I* being equal to *1 to iter-1* being input to the first step of iteration *I*+1, and whereby *iter* is a multiple of three.

8. Method according to claim 7, whereby the third step is performed in a third block other than the first block and the second block and the output second step is input to the third block.

9. Method according to claim 7 or claim 8, whereby the third step performs a swap and exchange of matrices' elements.

10. Method according to any of the claims 6 to 9, whereby the first step performs a transformation of a 2x2 square matrix to a 2x2 upper triangular square matrix and the second step transforms a $2{\times}2$ upper triangular matrix to a to a 2x2 diagonal square matrix.

11. Method according to any one of claims 6 to 10 for Complex Singular Value Decomposition of a number of 4x4 consecutive matrices.

12. Method according to claim 9, whereby the swap and exchange of matrices' elements is effected by signal interconnections.

## Patentansprüche

1. Einrichtung für komplexe Einzelwertzerlegung entweder einer einzelnen oder einer Anzahl von aufeinanderfolgenden Matrizen in entweder jeweils eine einzelne oder eine Anzahl von aufeinanderfolgenden hermiteschen unitären Matrizen von Eigenvektoren, jeweils eine einzelne oder eine Anzahl von aufeinanderfolgenden Diagonalmatrizen von Eigenwerten, und jeweils eine Anzahl von aufeinanderfolgende unitären Matrizen von Eigenvektoren, welche eine erste Struktur beinhaltet, welche konfiguriert ist, um die Diagonalmatrizen von Eigenwerten zu berechnen, **dadurch gekennzeichnet, dass** die Einrichtung weiter eine zweite Struktur, welche konfiguriert ist, um die hermiteschen unitären Matrizen von Eigenvektoren zu berechnen, und eine dritte Struktur, welche konfiguriert ist, um die unitären Matrizen von Eigenvektoren zu berechnen, beinhaltet, wobei die erste Struktur zumindest einen Satz von Blöcken (20) beinhaltet, wobei jeder Satz von Blöcken der ersten Struktur einen ersten Hardwareblock (60, 13), einen zweiten Hardwareblock (70, 14), welcher sich von dem ersten Hardwareblock unterscheidet, und einen dritten Hardwareblock (15), welcher sich von dem ersten und dem zweiten Hardwareblock unterscheidet, umfasst, und

✓ der erste Hardwareblock (60, 13) Mittel zum Umwandeln einer 2x2 quadratischen Matrix in eine 2x2 quadratische obere Dreiecksmatrix beinhaltet,

✓ der zweite Hardwareblock (70, 14) Mittel zum Umwandeln einer 2x2 obere Dreiecksmatrix in eine 2x2 quadratische Diagonalmatrix beinhaltet,

✓ der dritte Hardwareblock (15) Mittel zum Tauschen und Austauschen von Elementen von Matrizen beinhaltet,

✓ die erste Struktur Mittel umfasst, um den ersten Hardwareblock mit dem zweiten Hardwareblock zu verknüpfen, sodass die Ausgabe des ersten Hardwareblocks in den zweiten Hardwareblock eingegeben wird, und die Einrichtung weiter Mittel umfasst, um den zweiten Hardwareblock mit dem dritten Hardwareblock zu verknüpfen, sodass die Ausgabe des zweiten Hardwareblocks in den dritten Hardwareblock eingegeben wird,

✓ die zweite Struktur eine gleiche Anzahl von Sätzen von Blöcken (40) mit den Sätzen von Blöcken (20) der ersten Struktur beinhaltet, wobei jeder Satz von Block der zweiten Struktur (40) Mittel (4) aufweist, welche konfiguriert sind, um Daten aus Ausgabemitteln einzugeben, welche für einen entsprechenden Satz von Block **(20)** der ersten Struktur bereitgestellt sind, und die dritte Struktur eine gleiche Anzahl von Sätzen von Blöcken **(50)** mit dem Satz von Blöcken **(20)** der ersten Struktur beinhaltet, wobei jeder Satz von Block der dritten Struktur **(20)** Mittel **(5)** aufweist, welche konfiguriert sind, um Daten aus Ausgabemitteln einzugeben, welche für einen entsprechenden Satz von Block **(20)** der ersten Struktur bereitgestellt sind.

2. Einrichtung nach Anspruch 1, wobei die erste Struktur n Sätze von Blöcken beinhaltet, wobei n ein Vielfaches von drei ist, wobei jeder der Sätze von Blöcken einen ersten Hardwareblock **(60, 13)**, einen zweiten Hardwareblock **(70, 14)**, welcher sich von dem ersten Hardwareblock unterscheidet, und einen dritten Hardwareblock **(15)**, welcher sich von dem ersten und den zweiten Hardwareblock unterscheidet, umfasst; wobei

✓ der erste Hardwareblock **(60, 13)** jedes der n Sätze von Blöcken Mittel zum Umwandeln einer 2x2 quadratischen Matrix in eine 2x2 quadratische obere Dreiecksmatrix beinhaltet,
✓ der zweite Hardwareblock **(70, 14)** jedes der n Sätze von Blöcken Mittel zum Umwandeln einer 2x2 obere Dreiecksmatrix in eine 2x2 quadratische Diagonalmatrix beinhaltet,
✓ der dritte Hardwareblock **(15)** jedes der n Sätze von Blöcken Mittel zum Tauschen und Austauschen von Elementen von Matrizen beinhaltet,
✓ die erste Struktur Mittel beinhaltet, um die Ausgabe des i-ten Satz von Blöcken an den i+1 Satz von Blöcken zu übermitteln, wobei i gleich 1 bis n-1 ist, und
✓ die Einrichtung Mittel beinhaltet, um eine Vielzahl von aufeinanderfolgenden Matrizen gleichzeitig zu verarbeiten.

3. Einrichtung nach Anspruch 1 oder Anspruch 2, wobei die Mittel zum Tauschen und Austauschen von Elementen von Matrizen Kabelverbindungen sind.

4. Einrichtung nach Anspruch 1 oder Anspruch 2, wobei die Mittel zum Tauschen und Austauschen von Elementen von Matrizen Softwaremittel sind.

5. Einrichtung nach einem der Ansprüche 1 bis 4 für komplexe Einzelwertzerlegung einer Anzahl von aufeinanderfolgenden $4\times4$-Matrizen, wobei

✓ der erste Hardwareblock **(60, 13)** vier unterscheidbare Array-Strukturen beinhaltet, wobei jede einzelne der vier systolischen Array-Strukturen konfiguriert ist, um eine 2x2 quadratische Matrix zu verarbeiten,
✓ der zweite Hardwareblock **(70, 14)** vier unterscheidbare systolische Array-Strukturen beinhaltet, wobei jede einzelne der vier systolischen Array-Strukturen konfiguriert ist, um eine 2x2 quadratische Matrix zu verarbeiten,
✓ jede einzelne der vier unterscheidbaren systolischen Array-Strukturen des ersten Hardwareblocks **(60, 13)** und jede einzelne der vier unterscheidbaren systolischen Array-Strukturen des zweiten Hardwareblocks **(70, 14)** komplementäre Mittel umfassen, welche den ersten Hardwareblock mit dem zweiten Hardwareblock verknüpfen.

6. Verfahren für komplexe Einzelwertzerlegung einer Anzahl von zumindest zwei aufeinanderfolgenden Matrizen in eine Anzahl von aufeinanderfolgenden hermiteschen unitären Matrizen von Eigenvektoren, einer Anzahl von aufeinanderfolgenden Diagonalmatrizen von Eigenwerten und einer Anzahl von aufeinanderfolgenden unitären Matrizen von Eigenvektoren, wobei

✓ jede aufeinanderfolgende Matrix einer Anzahl von *iter* identischen Iterationen in einer ersten Struktur unterzogen wird, wobei die Ausgabe jeder Iteration Drehmatrizen und die Diagonalmatrix von Eigenwerten ist,
✓ die Diagonalmatrix von Eigenwerten *der j-ten* Iteration die Eingabe für die *j+1* Iteration ist, wobei *j = 1 bis iter-1* ist,
✓ jede Iteration einen ersten Schritt und einen zweiten Schritt, welcher sich von dem ersten Schritt unterscheidet, beinhaltet, wobei die Ausgabe des ersten Schritts in den zweiten Schritt eingegeben wird,
**dadurch gekennzeichnet, dass**
✓ wenn eine Matrix in dem zweiten Schritt ihrer *i-ten* Iteration verarbeitet wird, wobei *i* gleich *1 bis iter* ist, die folgende Matrix der aufeinanderfolgenden Matrizen in dem ersten Schritt ihrer *i-ten* Iteration verarbeitet wird,
✓ jeder einzelne des ersten Schritts und des zweiten Schritts in unterscheidbaren Hardwareblöcken durchgeführt wird, sodass der erste Schritt in einem ersten Hardwareblock durchgeführt wird und der zweite Schritt in einem zweiten Hardwareblock durchgeführt wird, welcher sich von dem ersten Hardwareblock unterscheidet, und die Ausgabe des ersten Schritts in den zweiten Block eingegeben wird,

✓ während jeder Iteration die Drehmatrizen einer zweiten Struktur, welche für die Berechnung der hermiteschen unitären Matrizen bereitgestellt ist, und einer dritten Struktur, welche für die Berechnung der unitären Matrizen von Eigenvektoren bereitgestellt ist, zugeführt werden, wobei die erste Struktur, die zweite Struktur und die dritte Struktur unterscheidbar voneinander sind.

7. Verfahren nach Anspruch 6, wobei jede Iteration einen dritten Schritt beinhaltet, welcher sich von dem ersten Schritt und dem zweiten Schritt unterscheidet, wobei die Ausgabe des zweiten Schritts in den dritten Schritt eingegeben wird und die Ausgabe des dritten Schritts der *l-ten* Iteration in den ersten Schritt von Iteration *l+1* eingegeben ist, wobei *l* gleich *1 bis iter-1* ist, und wobei *iter* ein Vielfaches von drei ist

8. Verfahren nach Anspruch 7, wobei der dritte Schritt in einem dritten Block durchgeführt wird, welcher sich von dem ersten Block und dem zweiten Block unterscheidet, und der ausgegebene zweite Schritt in den dritten Block eingegeben wird.

9. Verfahren nach Anspruch 7 oder Anspruch 8, wobei der dritte Schritt ein Tauschen und Austauschen von Matrizenelementen durchführt.

10. Verfahren nach einem der Ansprüche 6 bis 9, wobei der erste Schritt eine Umwandlung einer 2x2 quadratischen Matrix in eine 2x2 quadratische obere Dreiecksmatrix durchführt und der zweite Schritt eine 2x2 obere Dreiecksmatrix in eine 2x2 quadratische Diagonalmatrix umwandelt.

11. Verfahren nach einem der Ansprüche 6 bis 10 für komplexe Einzelwertzerlegung einer Anzahl von aufeinanderfolgenden 4×4-Matrizen.

12. Verfahren nach Anspruch 9, wobei das Tauschen und Austauschen von Matrizenelementen durch Signalverbindungen bewirkt wird.

## Revendications

1. Appareil pour une décomposition en valeurs singulières complexes d'une seule ou d'un nombre de matrices consécutives, en une seule ou un nombre de matrices unitaires hermitiennes consécutives de vecteurs propres respectivement, une seule ou un nombre de matrices diagonales consécutives de valeurs propres respectivement et une seule ou un nombre de matrices unitaires consécutives de vecteurs propres respectivement, incluant une première structure configurée pour calculer les matrices diagonales de valeurs propres, **caractérisé en ce que** l'appareil inclut en outre une deuxième structure configurée pour calculer les matrices unitaires hermitiennes de vecteurs propres et une troisième structure configurée pour calculer les matrices unitaires de vecteurs propres, selon lequel la première structure inclut au moins un ensemble de blocs (20), chaque ensemble de blocs de la première structure comprenant un premier bloc matériel (60, 13), un deuxième bloc matériel (70, 14) différent du premier bloc matériel et un troisième bloc matériel (15) différent du premier bloc matériel et du deuxième bloc matériel et

✓ le premier bloc matériel (60, 13) inclut des moyens pour transformer une matrice carrée 2x2 en une matrice carrée triangulaire supérieure 2x2,
✓ le deuxième bloc matériel (70, 14) inclut des moyens pour transformer une matrice triangulaire supérieure 2x2 en une matrice carrée diagonale 2x2,
✓ le troisième bloc matériel (15) inclut des moyens pour permuter et échanger des éléments de matrices,
✓ la première structure comprend des moyens pour lier le premier bloc matériel au deuxième bloc matériel, de sorte que la sortie du premier bloc matériel soit appliquée en entrée au deuxième bloc matériel et l'appareil comprend en outre des moyens pour lier le deuxième bloc matériel au troisième bloc matériel, de sorte que la sortie du deuxième bloc matériel soit appliquée en entrée au troisième bloc matériel,
✓ la deuxième structure inclut un nombre d'ensembles de blocs (40) égal à celui des ensembles de blocs (20) de la première structure, chaque ensemble de blocs de la deuxième structure (40) ayant des moyens (4) configurés pour entrer des données provenant de moyens de sortie dont est pourvu un ensemble correspondant de blocs (20) de la première structure, et la troisième structure inclut un nombre d'ensembles de blocs (50) égal à celui des ensembles de blocs (20) de la première structure, chaque ensemble de blocs de la troisième structure (20) ayant des moyens (5) configurés pour entrer des données provenant de moyens de sortie dont est pourvu un ensemble correspondant de blocs (20) de la première structure.

**2.** Appareil selon la revendication 1, dans lequel la première structure inclut n ensembles de blocs, n étant un multiple de trois, chacun desdits ensembles de blocs comprenant un premier bloc matériel **(60, 13),** un deuxième bloc matériel **(70, 14)** différent du premier bloc matériel et un troisième bloc matériel **(15)** différent du premier bloc matériel et du deuxième bloc matériel ; dans lequel

✓ le premier bloc matériel **(60, 13)** de chacun desdits n ensembles de blocs inclut des moyens pour transformer une matrice carrée 2x2 en une matrice carrée triangulaire supérieure 2x2,

✓ le deuxième bloc matériel **(70, 14)** de chacun desdits n ensembles de blocs inclut des moyens pour transformer une matrice triangulaire supérieure 2x2 en une matrice carrée diagonale 2x2,

✓ le troisième bloc matériel **(15)** de chacun desdits n ensembles de blocs inclut des moyens pour permuter et échanger des éléments de matrices,

✓ la première structure inclut des moyens pour transmettre la sortie du $i^{ème}$ ensemble de blocs, où i égale 1 à n-1, à l'ensemble de blocs i+1, et

✓ l'appareil inclut des moyens pour traiter une pluralité de matrices consécutives simultanément.

**3.** Appareil selon la revendication 1 ou la revendication 2, dans lequel les moyens pour permuter et échanger des éléments de matrices sont des connexions de câblage.

**4.** Appareil selon la revendication 1 ou la revendication 2, dans lequel les moyens pour permuter et échanger des éléments de matrices sont des moyens logiciels.

**5.** Appareil selon l'une quelconque des revendications 1 à 4, pour une décomposition en valeurs singulières complexes d'un nombre de matrices 4x4 consécutives, dans lequel

✓ le premier bloc matériel **(60, 13)** inclut quatre structures de réseau systolique distinctes, chacune des quatre structures de réseau systolique étant configurée pour traiter une matrice carrée 2x2,

✓ le deuxième bloc matériel **(70, 14)** inclut quatre structures de réseau systolique distinctes, chacune des quatre structures de réseau systolique étant configurée pour traiter une matrice carrée 2x2,

✓ chacune des quatre structures de réseau systolique distinctes du premier bloc matériel **(60, 13)** et chacune des quatre structures de réseau systolique distinctes du deuxième bloc matériel **(70, 14)** comprennent des moyens complémentaires qui lient le premier bloc matériel au deuxième bloc matériel.

**6.** Procédé pour une décomposition en valeurs singulières complexes d'un nombre de matrices consécutives au moins égal à deux, en un nombre de matrices unitaires hermitiennes consécutives de vecteurs propres, un nombre de matrices diagonales consécutives de valeurs propres et un nombre de matrices unitaires consécutives de vecteurs propres, dans lequel

✓ chaque matrice consécutive est soumise à un nombre d'itérations identiques *iter* dans une première structure, la sortie de chaque itération étant des matrices de rotation et la matrice diagonale de valeurs propres,

✓ la matrice diagonale de valeurs propres de la $j^{ème}$ itération, où *j = 1 à iter-1,* est l'entrée de la $j+1^{ème}$ itération,

✓ chaque itération inclut une première étape et une deuxième étape différente de la première étape, la sortie de la première étape étant appliquée en entrée à la deuxième étape,

**caractérisé en ce que**

✓ lorsqu'une matrice est traitée à la deuxième étape de son $i^{ème}$ itération, où i = 1 à *iter,* la matrice suivante des matrices consécutives est traitée à la première étape de son $i^{ème}$ itération,

✓ la première étape et la deuxième étape sont effectuées chacune dans des blocs matériels distincts, de sorte que la première étape est effectuée dans un premier bloc matériel et que la deuxième étape est effectuée dans un deuxième bloc matériel, différent du premier bloc matériel, et la sortie de la première étape est appliquée en entrée au deuxième bloc,

✓ durant chaque itération, les matrices de rotation sont fournies à une deuxième structure prévue pour le calcul des matrices unitaires hermitiennes et à une troisième structure prévue pour le calcul des matrices unitaires de vecteurs propres, la première structure, la deuxième structure et la troisième structure étant distinctes les unes des autres.

**7.** Procédé selon la revendication 6, dans lequel chaque itération inclut une troisième étape différente de la première étape et de la deuxième étape, la sortie de la deuxième étape étant appliquée en entrée à la troisième étape et la sortie de la troisième étape de la $l^{ème}$ itération, où *l* égale *1 à iter-1,* étant appliquée en entrée à la première étape de l'itération *l+1,* et dans lequel *iter* est un multiple de trois.

8. Procédé selon la revendication 7, dans lequel la troisième étape est effectuée dans un troisième bloc différent du premier bloc et du deuxième bloc et la sortie de la deuxième étape est appliquée en entrée au troisième bloc.

9. Procédé selon la revendication 7 ou la revendication 8, dans lequel la troisième étape effectue une permutation et un échange d'éléments de matrices.

10. Procédé selon l'une quelconque des revendications 6 à 9, dans lequel la première étape effectue une transformation d'une matrice carrée 2x2 en une matrice carrée triangulaire supérieure 2x2 et la deuxième étape transforme une matrice triangulaire supérieure 2x2 en une matrice carrée diagonale 2x2.

11. Procédé selon l'une quelconque des revendications 6 à 10 pour une décomposition en valeurs singulières complexes d'un certain nombre de matrices consécutives 4x4.

12. Procédé selon la revendication 9, dans lequel la permutation et l'échange d'éléments de matrices sont effectués par des interconnexions de signaux.

Figure 1

Figure 2

Figure 3

$\mathbf{R}_1^{11}(k)\ \mathbf{R}_2^{11}(k)$

$\mathbf{R}_1^{22}(k)\ \mathbf{R}_2^{22}(k)$

5

Swap and
Exchange

5

$\mathbf{V}^{11'}(k)$

$\mathbf{V}^{12'}(k)$

$\mathbf{V}^{11}(k)$

$\mathbf{V}^{12}(k)$

$\mathbf{R}_1^{11}(k)\ \mathbf{R}_2^{11}(k)$

$\mathbf{R}_1^{22}(k)\ \mathbf{R}_2^{22}(k)$

19

$\mathbf{V}^{21'}(k)$

$\mathbf{V}^{22'}(k)$

$\mathbf{V}^{21}(k)$

$\mathbf{V}^{22}(k)$

50

# Figure 4

Figure 5

Figure 6

Figure 7

Figure 8

Figure 9

Figure 10

**EP 2 585 943 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **N. D. HEMKUMAR ; J. R. CAVALARO.** A Systolic VLSI Architecture for Complex SVD. *IEEE International Symposium on Circuits and Systems (ISCAS),* May 1992, 1061-1064